Europäisches Patentamt

European Patent Office

Office européen des brevets

(19)

(11) Veröffentlichungsnummer: **0 060 552**
**B1**

(12) **EUROPÄISCHE PATENTSCHRIFT**

(45) Veröffentlichungstag der Patentschrift:
11.09.85

(51) Int. Cl.⁴: **G 01 M 3/18,** H 04 Q 9/14,
F 17 D 5/06

(21) Anmeldenummer: 82102100.3

(22) Anmeldetag: 15.03.82

(54) Anordnung zur Überwachung eines Rohrleitungssystems, insbesondere aus wärmegedämmten Fernwärmerohren.

(30) Priorität: 16.03.81 DE 3110054

(43) Veröffentlichungstag der Anmeldung:
22.09.82 Patentblatt 82/38

(45) Bekanntmachung des Hinweises auf die Patenterteilung:
11.09.85 Patentblatt 85/37

(84) Benannte Vertragsstaaten:
AT BE CH DE FR GB IT LI LU NL SE

(56) Entgegenhaltungen:
DE - A - 2 654 849
FR - A - 2 432 133
GB - A - 1 105 973
US - A - 4 127 845
US - A - 4 196 417

(73) Patentinhaber: G + H MONTAGE GmbH,
Westendstrasse 17, D-6700 Ludwigshafen (DE)

(72) Erfinder: Berger, Alfred, Carl Zimmermannstrasse 49,
D-6724 Dudenhofen (DE)

(74) Vertreter: KUHNEN & WACKER Patentanwaltsbüro,
Schneggstrasse 3-5 Postfach 1729, D-8050 Freising (DE)

## Beschreibung

Die Erfindung betrifft eine Anordnung gemäß dem Oberbegriff des Anspruchs 1. Eine solche Anordnung ist bereits aus der FR-A-2 432 133 bekannt.

Wärmegedämmte Rohre, aus dem Ort miteinander verschweißten Rohrschüssen werden insbesondere für erdverlegte Fernwärmerohrleitungen verwendet und besitzen in einer häufigen Bauweise ein Mediumrohr aus Stahl, ein das Mediumrohr mit Abstand umgebendes äußeres Mantelrohr aus Polyäthylen und dazwischen eine Wärmedämmschicht aus Polyurethan-Hartschaum oder auch Mineralfaserwolle, in welche eine Signalleitung eingebettet ist. Derartige Rohre können fabrikmäßig in einzelnen Rohrschüssen vorgefertigt werden, wobei am Ort die Verbindung der Rohrschüsse erfolgt. Hierzu ragt an den fabrikmäßig vorgefertigten Rohrschüssen das innere Mediumrohr um beispielsweise 10 cm beidseitig über die Wärmedämmschicht und das Mantelrohr hinaus, so daß bei der Schweißung benachbarter Enden der Medium-Rohrschüsse die Schweißstelle gut zugänglich ist und keine Beeinträchtigung von Wärmedämmschicht und Mantelrohr durch die Schweißwärme erfolgt. Im Anschluß an die Schweißung muß dann der Bereich des Schweißstoßes am Ort mit einem entsprechenden Abschnitt einer Wärmedämmschicht und einer muffenartigen Ummantelung umgeben werden, die häufig als rohrförmig umfangsseitig geschlossen Überschubmuffe ausgebildet ist und welche die einander benachbarten Enden des Mantelrohres im Schweißbereich überspannt. Es liegt auf der Hand, daß gerade an solchen Verbindungsstellen, insbesondere bei endverlegten Rohren, aber auch bei in Rohrkanälen verlegten Rohren Feuchtigkeit, Schlamm und gasförmig oder flüssige Schadstoffe in den Dämmbereich von außen oder bei schadhaften Schweißstellen an dem Mediumrohr von der Mediumrohrseite her eindringen können. Derartige Störungen müssen nicht nur wegen der die Dämmung zerstörenden Wirkungen solcher Einflüsse, sondern auch wegen der Gefahr nachteiliger Umgebungsbeeinflussungen frühzeitig erkannt und beseitigt werden. Da natürlich solche Störungen auch im Verlauf eines Rohrschusses auftreten können, wird an einer dem Rohrverlauf folgende Signalleitung über die Länge eines Rohrschusses mindestens ein Fühler vorgesehen, der physikalische Änderungen der Rohrleitung und/oder im Bereich der Rohrleitung wie insbesondere Feuchtigkeits- und/oder Temperaturänderungen erfassen kann, so daß der Zustand dieser Fühler sowohl im Bereich eines Rohrschusses als auch an den Schweißstellen zwischen zwei Rohrschüssen oder Abzweigungen oder Endanschlüssen mittels einem daran anschließbaren Überwachungsgerät ermittelbar ist.

Zur Erfassung des Zustandes solcher Fühler gibt es je nach Fühlerart verschiedene Ortungssysteme, mit welchen insbesondere die in die Dämmung eindringende Feuchtigkeit als Leck zwar gemeldet, dessen Lage aber nicht genau bestimmt wird. Zum Beispiel weist ein bekanntes System zwei parallel zueinander verlaufende und in die Rohrleitungsdämmung eingeschäumte, voneinander elektrisch isolierte Kupferdrähte auf, an welche Feuchtigkeitsindikatoren bzw. -fühler im Verlauf eines Rohrschusses und im Bereich von Verbindungsmuffen angeschlossen sind. Solche Feuchtigkeitsfühler bestehen z. B. aus zwei durch ein löschpapierähnliches Material voneinander getrennten Kupferplatten, welche durch das Feutwerden dieses Materials miteinander in leitende Verbindung kommen und einen elektrischen Kurzschluß darstellen, der dann durch ein Laufzeitmeßverfahren geortet werden kann. Nachteilig dabei ist, daß durch Meßwertfälschungen und -abweichungen der genaue Ort einer Fehlerstelle nur unter Berücksichtigung solcher Meßwertabweichungen und -verfälschungen bestimmt werden kann. Außerdem ist es sehr kostenaufwendig, solche Fühler nicht nur im Muffenbereich, sondern zusätzlich in den Verlauf eines Rohrschusses mit einzubauen, so daß die Strecke zwischen den Muffen von 6 bis 12 m meist nicht erfaßt wird. Außerdem kann mit einem derartigen System lediglich festgestellt werden, ob ein Kurzschluß, d. h. Feuchtigkeit vorhanden ist oder nicht, unabhängig davon, ob tatsächlich mehrere Kurzschlüsse, d. h. mehrere Feuchtigkeitseinbrüche gleichzeitig bestehen. Auch ist nicht feststellbar, ob eine Störungsausbreitung erfolgt und in welcher Richtung mit welcher Geschwindigkeit und welcher Art. Treten mehrere Störungen auf, so muß durch eine größere Anzahl von Messungen an zugänglichen Stellen, z. B. Hausanschlußstellen, versucht werden, die Störung, die auch ein Leitungsbruch sein kann, einzugrenzen, wobei entsprechend geschultes Fachpersonal und aufwendige Meßgeräte erforderlich sind.

Diese Nachteile treten auch bei Rohrleitungssystem auf, bei welchen die dem Rohrverlauf folgende Signalleitung als ein mit perforierter Teflonumhüllung versehener Chrom-Nickel-Draht ausgebildet ist, der bei der Herstellung eines Rohrschusses mit in die Dämmung eingeschäumt worden ist, so daß dieser Draht im gesamten Rohrleitungssystem zwischen Mediumrohr und Außenmantel in beispielsweise einer Polyurethandämmung liegt. Im Betriebszustand wird dem Draht eine definierte Spannung aufgegeben, welche bei Feuchtigkeitseintritt geteilt und über ein automatisch arbeitendes Spannungsteilungsmeßgerät nur den Bereich des Feuchtigkeitseintrittes lokalisierbar macht. Vorteil dieses Systems ist, daß das gesamte Rohrleitungssystem überprüft werden kann und nicht nur schwerpunktmäßig die Muffenstellen an den Schweißnähten zwei aufeinanderstoßender Rohrschüsse erfaßt werden können. Insbesondere bei Rohrleitungssystemen, bei welchen die Feuchtigkeitsausbreitung nicht oder nur unzureichend behindert ist, kann nur ein Feuchteschwerpunkt gemessen werden, aber nicht, wie bereits erwähnt, Geschwindigkeit und Richtung einer Fehlerausbreitung, so daß dieses System für offene Rohrleitungssysteme, wie z. B. einen Haubenkanal, Stahlmantelrohrverfahren oder Doppelmantelrohre ungeeignet ist, weil bei diesen Rohrsystemen sich die Feuchtigkeit zwischen Außenmantel und Dämmung relativ ungehindert ausbreiten kann und somit keine Möglichkeit besteht, den Ort des ersten Feuchtigkeitseinbruches festzustellen bzw. dessen Ausbreitungsrichtung.

Auch bei anderen Rohrleitungssystemen, bei denen das Evakuieren von Hohlräumen oder das Feststellen von Spannungsabflüssen in das Erdreich zur Fehlerortung verwendet wird, besteht neben dem Nachteil ungenauer und aufwendigen Messungen der wesentliche Nachteil darin, daß für die Fehlerortung ebenso wie für die laufende Überwachung eine ringförmige geschlossene Überwachungsstrecke notwendig ist. Da jedoch die meisten Rohrleitungssysteme als verzweigte Netze aufgebaut sind, läßt sich nur dadurch eine ringförmig geschlossene Überwachungsstrecke aufbauen, daß alle offenen Enden überbrückt werden. Es werden daher im Regelfall in jedes Rohr eine die Fühler erfassende Signalleitung und eine den Ring schließende Rückleitung in ein Rohr eingebettet, wobei beispielsweise die Signalleitung als Chrom-Nickel-Draht mit einem bestimmten Widerstandswert ausgebildet ist, während die Rückleitung von einem Kupferdraht gebildet wird, damit dessen Widerstand möglichst gering und somit eine Meßwertverfälschung durch die Rückleitung verringert wird.

Bei dem aus der FR-A-2 432 133 bekannten Rohrleitungssystem ist ein Meßfühler jeweils einzeln an entlang der Rohrleitung verteilten Detektoren angeschlossen sind. Diese einzelnen Detektoren sind mittels einer Signal- und einer Rückleitung zueinander parallel geschaltet und mit einer Überwachungsstation verbunden. Das Ansteuern und Abfragen der einzelnen Detektoren erfolgt nach einem taktgebundenen Verfahren, wobei dieser Takt sowohl von der Überwachungsstation als auch von den einzelnen Detektoren erzeugt wird. Bei einer bestimmten, für den jeweiligen Detektor spezifischen Anzahl von Taktimpulsen, schaltet der Detektor den Ausgang des Meßfühlers auf die Rückleitung, so daß dieses Ausgangssignal in den Überwachungsstationen empfangen werden kann.

Aus der US-A 4 127 845 ist ferner ein Telemetrieüberwachungssystem zur Überwachung des Betriebszustandes einer Reihe von Außenstationen von einer Zentrale aus bekannt. Die Abfrage des Zustandes einzelner Außenstationen erfolgt über in diesen Stationen enthaltene, die Stationen an eine Leitung koppelnde Schalter, die von der Zentrale aus wahlfrei adressierbar sind. Bei Installation des Rohrleitungssystems müssen die einzelnen Meßfühler und die zugehörigen Meßstationen in die Wärmedämmung integriert werden. Dabei muß verhindert werden, daß die Lage der Meßfühler durch die nachträglich angebrachte Wärmeisolierung verändert wird. Außerdem ist darauf zu achten, daß die elektrische Verbindung zwischen den Meßstationen und den Meßfühlern sicher gewährleistet und einfach realisierbar ist. Weiterhin muß der Nachteil vermieden werden, daß die Wärmedämmung des Rohrsystems in der Umgebung der Meßfühler und Meßstationen schlechter ist als in den übrigen Rohrbereichen.

Es ist daher Aufgabe der Erfindung, ein Rohrleitungssystem der im Oberbegriff des Anspruches 1 genannten Art derart zu schaffen, daß bei einer vereinfachten Installation verbunden mit einer hohen Betriebssicherheit eine gleichmäßige Wärmedämmung über den ganzen Rohrleitungsbereich erzielt wird.

Diese Aufgabe wird durch die kennzeichnenden Merkmale des Anspruches 1 gelöst. In den wärmedämmenden vorgefertigten Teilen, die die Rohre in den Bereichen der Verbindungsschweißstellen umgeben, sind Aussparungen vorgesehen, in die die jeweiligen Meßstationen und die dazugehörigen Meßfühler genau eingepaßt sind. Damit umschließt das wärmedämmende Material diese Meßeinrichtungen formtreu, so daß die Wärmedämmung in diesen Bereichen nicht beeinträchtigt ist.

Vorteilhafte Weiterbildungen der Erfindung ergeben sich aus den Unteransprüchen.

Ein besonderer Vorteil der Erfindung besteht darin, daß die Meßfühler und Meßstationen bereits bei der Produktion in die vorgefertigten Wärmedämmelemente eingearbeitet werden, so daß bei der Installation des Rohrleitungssystems vor Ort die Montage der vorgefertigten Wärmedämmelemente und der Meßeinrichtungen in einem Arbeitsgang vollzogen werden kann. Nach Montage der vorgefertigten Wärmedämmelemente mit den darin enthaltenen Meßeinrichtungen müssen die einzelnen Meßstationen lediglich noch miteinander elektrisch verdrahtet werden.

Die Einzelheiten, Merkmale und Vorteile der Erfindung ergeben sich aus der nachfolgenden Beschreibung eines Ausführungsbeispiels anhand der Zeichnung. Darin zeigt

Fig. 1 einen Schnitt durch einen Teilausschnitt eines Rohrleitungssystems, bei welchem zwei Rohrschußstücke in einer Verbindungsmuffe mit einer Schweißverbindung versehen sind und wobei in Aussparungen in der Verbindungsmuffe Schalter und Leitungen sowie Fühler eingesetzt sind; und

Fig. 2 in schematischer Darstellung einen Schalter gemäß Fig. 1 mit zugehörigem Signalverlauf und Anschluß eines Überwachungsgerätes sowie einer Anzeigevorrichtung.

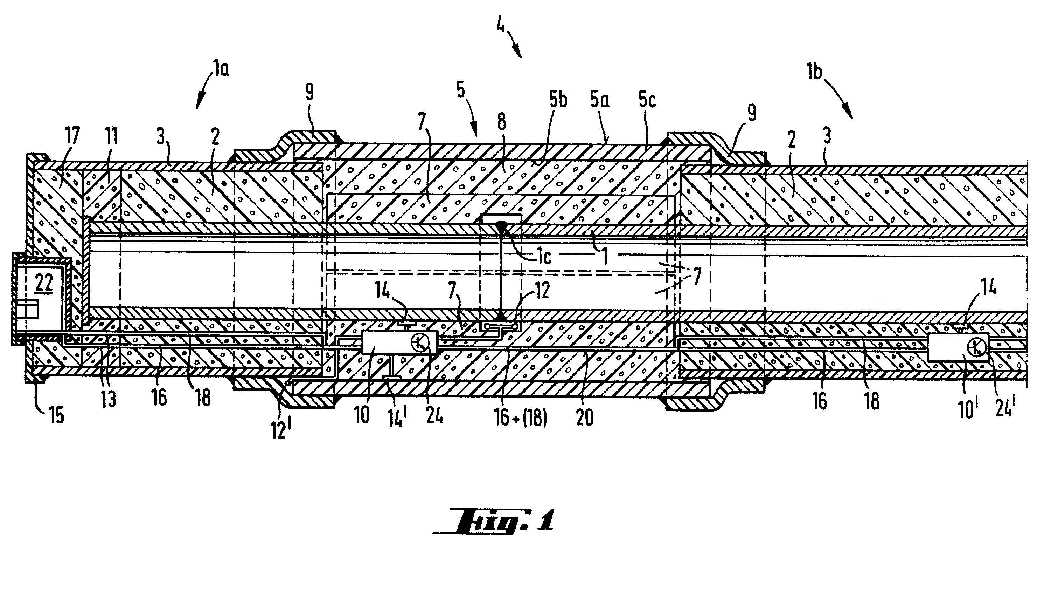

Gemäß Fig. 1 besteht ein Mediumrohr 1, das beispielsweise aus Stahl gefertigt ist und für eine Fernwärme-Rohrleitung verwendet werden kann, aus benachbarten Rohrschüssen 1a und 1b, die an einem Schweißstoß 1c miteinander verbunden sind. Die fabrikmäßig vorgefertigten Rohrschüsse 1a und 1b sind über den größten Teil ihrer Länge mit einer Wärmedämmschicht 2, welche beispielsweise aus Polyurethan-Hartschaum besteht, und einem Mantelrohr 3, beispielsweise aus Polyäthylen, versehen.

Im Bereich einer Verbindungsmuffe überdeckt eine Überschubmuffe 5 beispielsweise aus Polyäthylen, vorgefertigte Halbschalen 7 aus Polyurethan-Hartschaum und eine darüber angeordnete Ortschaum-Dämmschicht 8, welche durch eine nicht näher dargestellte Einspritzöffnung den Hohlraum zwischen dem Muffenrohr 5c und der vorgefertigten Halbschale 7 bis zur Innenoberfläche 5b des Muffenrohres 5c ausfüllt. Das Muffenrohr 5c wird in an sich bekannter Weise durch Dichtungsmaterial 9 seitlich abgedichtet, wobei das Dichtungsmaterial 9 beispielsweise eine Polyäthylen-Schrumpffolie sein kann, die zusammen mit der Überschubmuffe 5 auf die Enden der Rohrschüsse 1a und/oder 1b aufgebracht wurde und zum Verbindungsmuffenbereich 4 gehört. Das Mantelrohr 3 sowie die Überschubmuffe 5 können auch aus metallischen Werkstoffen bestehen, wobei dann für die Verwendung des Mantelrohres 3 als elektrischen Leiter eine elektrische Verbindung zwischen dem Mantelrohr 3 und der Überschubmuffe 5 zusätzlich zu der Dichtung 9 hergestellt werden muß, um keine Unterbrechung der Leitung zu bekommen. Dies kann jedoch einfach beim Einbau der entsprechenden elektrischen Bauteile erfolgen.

In die vorgefertigte Polyurethan-Hartschaum-Halbschale wird in eine entsprechend vorgesehene Aussparung ein Schalter 10 eingesetzt, an welchen Feuchtigkeitsfühler 12 sowie Temperaturfühler 14 und 14' angeschlossen sind. Diese Fühler können bereits werksseitig oder aber montageseitig in die entsprechenden vorgefertigten Halbschalen 7 eingesetzt werden und elektrisch mit dem Schalter 10 verbunden werden, so daß lediglich die aus den beiden Rohrschüssen 1a und 1b herausragenden Signalleitungen 16 und Rückleitungen 18 in entsprechende Aussparungsnuten 20 in den Halbschalen 7 eingelegt und elektrisch mit dem Schalter 10 verbunden werden müssen. Dies bedeutet, daß bei der Montage wie bisher lediglich eine der beiden vorgefertigten Halbschalen mit entsprechenden Überwachungseinrichtungen bestückt auf das Mediumrohr 1 nach der Herstellung der Schweißnaht 1c aufgebracht werden muß und die beiden Signalleitungsenden 16 und Rückleitungsenden 18 in die hierfür vorgesehenen Aussparungsnuten 20 eingelegt und in dem Schalter 10 verklemmt werden müssen. Sollten Außentemperaturfühler 14' oder Außenfeuchtigkeitsfühler 12' angeschlossen werden, so können diese sehr einfach mit den zugehörigen Leitungen in den für die Ortschaum-Dämmschicht 8 vorgesehenen, auszuschäumenden Bereich untergebracht bzw. darin verlegt werden, so daß mit diesen Fühlern auch im Bereich der Rohrleitung bestehende Feutigkeitsunterschiede und Temperaturunterschiede festgestellt werden können. Natürlich können an den Schalter 10 auch Druckfühler und/oder Spannungsfühler und/oder Dehnungsfühler und/oder Gasfühler und/oder Ölfühler oder dgl. angeschlossen werden, je nach dem, für welche Zwecke das Rohrleitungssystem verwendet und gegen welche Einflüsse es überwacht werden soll.

Bei der Darstellung gemäß Fig. 1 weist der Rohrschuß 1b einen Schalter 10' auf, der in die Dämmschicht 2 zwischen die Signalleitung 16 und Rückleitung 18 geschaltet, mit mindestens einem Fühler 14 und/oder 12 bestückt während der Herstellung dieses Rohrschusses eingebracht worden ist. Dies ist dann möglich, wenn der Schalter 10 aus wartungsfreien Bauelementen aufgebaut, nicht mit einer auswechselbaren Energiequelle bestückt und in gekapselter Ausführungsform hergestellt ist. Mit den mindestens für den Schalter 10' vorgesehenen Halbleiterbauelementen, deren Stromversorgung durch die Signalleitung 16 und Rückleitung 18 gewährleistet wird, und deren Stromverbrauch und damit Erwärmung sehr gering ist, kann eine Kette von gekapselten Schaltern 10' hergestellt werden, welche bei der Herstellung der Rohrschüsse 1b oder 1a mit in den Herstellungsprozeß eingespeist wird. Sollte aus irgendeinem nicht vorhersehbaren Grund eine Störung in der aus Signalleitung 16 und Rückleitung 18 sowie Schaltern 10' bestehenden Kette eines Rohrschusses ein Defekt auftreten, so könnte jederzeit auch nach dem Einbau eine parallele Kette außerhalb des Mantelrohres 3 gelegt werden, ohne daß dadurch wesentliche Nachteile für das übrige Netz entstehen würden, weil die parallele Kette an den Schalter 10 im Verbindungsmuffenbereich 4 angeschlossen werden könnte. Bei der Darstellung gemäß Fig. 1 ist der Rohrschuß 1a als ein Verschluß ausgeführt, wie er beispielsweise zur späteren Erweiterung des Rohrleitungssystems oder als Abschluß in einem Hausanschluß verwendet wird. Die in jeden Rohrschuß eingearbeitete Leitungskette mit zugehörigen Schaltern 10' kann dabei durch entsprechende Durchführungen 13 in vorgefertigten Dämmkappen 11 zu einem Diagnoseanschluß 22 geführt werden, wobei der Diagnoseanschluß 22 in einer Abschlußkappe 15 gehalten ist. Zweckmäßigerweise wird der Hohlraum zwischen der vorgefertigten Dämmkappe 11 und der Abschlußkappe 15 mit Ortschaum-Dämmung 17 ausgefüllt, wobei eine hierfür erforderliche Einspritzöffnung in der Abschlußkappe 15 nicht näher dargestellt ist.

Der Diagnoseanschluß 22 ist für den Anschluß eines Überwachungsgerätes vorgesehen, das nachfolgend noch näher beschrieben wird. Daneben kann der Diagnoseanschluß 22 auch Anzeigeinstrumente aufweisen, welche einen Teil der Fühler und einen Teil der Schalterzustände anzeigen können, je nach dem, ob der Diagnoseanschluß als Hausanschluß oder als Schachtanschluß verwendet wird.

Der Schalter 10 ist vorzugsweise und mindestens ein Halbleiterbauteil 24, das gemäß Fig. 1 symbolisch mit einem Transistor-Symbol dargestellt ist und mindestens die Eigenschaften eines Mono-Flops aufweist, d. h., daß auf einen bestimmten Signalimpuls, der auf der Signalleitung 16 kommt, das Mono-Flop mindestens einen der Fühler 12 oder 14 auf die Rückleitung 18 schaltet, so daß auf der gesamten Rückleitung 18 an jeder beliebigen Stelle der entsprechende Fühlerzustand abgenommen werden kann. Mit dem nächsten Signalimpuls würde beispielsweise ein anderer Fühler oder ein anderer Schalter 10' auf die Rückleitung 18 durchgeschaltet.

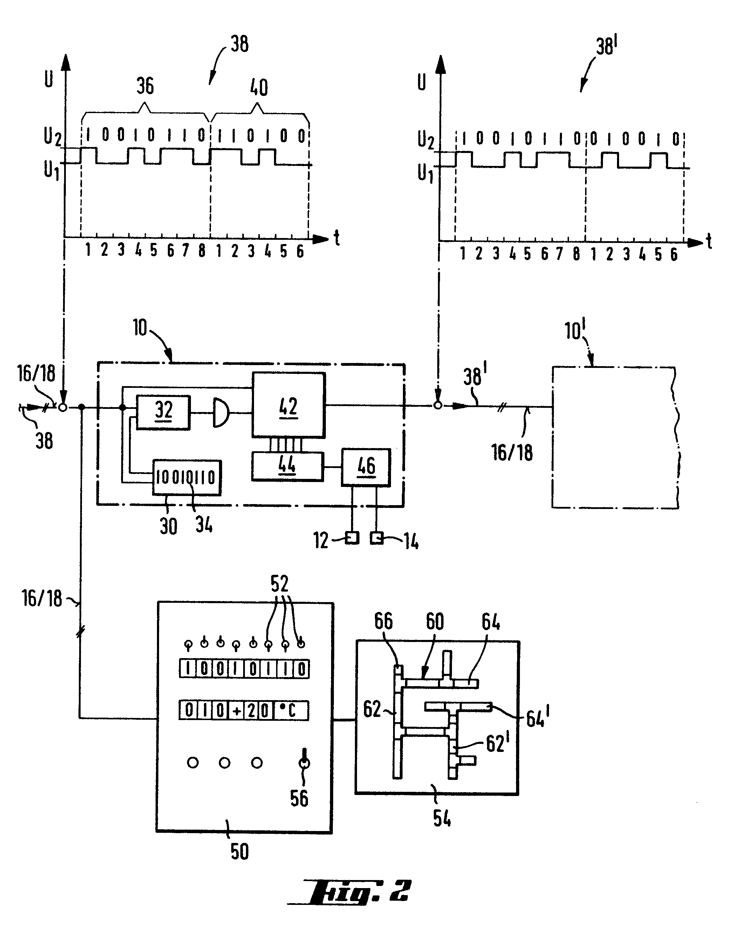

Gemäß Fig. 2 weist der Schalter 10 einen Adressenbaustein 30 auf, der vorzugsweise steckbar oder anderweitig leicht zugänglich adressierbar ist, so daß eine organisierte Adressierung des Schalters 10 entweder bei der Herstellung der Leitungskette oder spätestens bei der Montage vor Ort erfolgen kann. Bei einer besonders vorteilhaften Ausführungsform kann die Adressierung mit einem entsprechenden Adressierungscode auch über die Doppelleitung 16/18, die aus der Signalleitung 16 und der Rückleitung 18 besteht, programmiert werden. Des weiteren weist der Schalter 10 einen Komparator 32 auf. In dem Komparator 32 wird eine in dem Adreßbaustein 30 gespeicherte Adresse 34 mit einem Adressenabschnitt 36 eines digitalisierten Signals 38 verglichen, wobei das digitalisierte Signal 38 aus einem Adressenabschnitt 36 und einem Informationsabschnitt 40 besteht. Das digitalisierte Signal 38 wird auf der Signalleitung 16 in den Schalter 10 eingespeist. Wenn der Komparator 32 eine Übereinstimmung zwischen der Adresse 34 aus dem Adressenbaustein 30 und dem Adressenabschnitt 36 des digitalisierten Signals 38 feststellt, wird ein Übereinstimmungsimpuls auf eine Additionsschaltung 42 gegeben. In der Additionsschaltung 42 wird dann der Informationsabschnitt 40 des digitalisierten Signals 38 mit dem Inhalt eines Speichers 44 geprägt, so daß die in dem Speicher 44 stehenden Informationen auf den Informationsabschnitt 40 übertragen werden und das digitalisierte Signal 38 als Signal 38' auf der Rückleitung 18 abnehmbar ist. Die externen Fühler 12 und 14 sowie eventuell weitere Fühler sind an den Schalter 10 über eine Meßwerterfassungsvorrichtung 46 angeschlossen und die von diesen Fühlern gelieferten Meßwerte werden von der Meßwerterfassungsschaltung 46 auf den Speicher 44 gegeben, wobei eine Bitstelle des Informationsabschnittes 40 den Speicher 44 derart beeinflussen kann, daß je nach Bitinhalt der Speicher 44 gelöscht und für neue Meßwertaufnahmen bereitgestellt werden kann oder aber, daß der gespeicherte Inhalt in dem Speicher 44 erhalten bleibt. Dies hat den Vorteil, daß durch dieses Steuerbit im Informationsabschnitt 40 ein Meßwerttakt einstellbar wird, durch den zeitliche Änderungen bei der Meßwerterfassung besser verglichen und Änderungsgeschwindigkeiten besser erfaßt werden können.

Das digitalisierte Signal 38 wird auf der Signalleitung 16 von dem Überwachungsgerät abgegeben und auf dem gesamten Leitungsnetz verteilt. Bei demjenigen Schalter 10, der die übereinstimmende Adresse aufweist, wird der Speicherinhalt des Speichers 44 auf den Informationsabschnitt 40 übertragen und die somit erfaßten Meßwerte werden über das gesamte durch die Rückleitung 18 gebildete Netz verteilt und an dasselbe oder ein anderes Überwachungsgerät 50 geliefert. Je nach Anlage kann der Adreßabschnitt vier bis zehn Bitstellen aufweisen, wobei natürlich weitere Vergrößerungen nach oben bzw. Verkleinerungen nach unten möglich sind. Bei der in Fig. 2 dargestellten Ausführungsform weist der Adreßabschnitt 40 acht Bitstellen auf. Ebenso besteht der Informationsabschnitt je nach Anlage zwischen ein bis sechs Bitstellen mit ebenfalls Erweiterungsmöglichkeiten nach oben, je nach gewünschter Informationsdichte. Bei der Darstellung gemäß Fig. 2 weist der Informationsabschnitt sechs Bitstellen auf.

Die Adresse des jeweils angesteuerten Schalters 10 kann auf jedem Überwachungsgerät 50 oder Diagnosegerät mit entsprechenden Schaltern 52 eingestellt und gegebenenfalls zugehörigen Anzeigen angezeigt werden. Daraufhin erfolgt die Aussendung einer Impulsfolge mit der eingestellten Adresse über das gesamte Netz aus Signalleitungen 16. Bei demjenigen Schalter, bei welchem der Komparator 32 Übereinstimmung feststellt, werden die Meßwerte auf die adressierte Impulsfolge im Informationsabschnitt 40 aufgeprägt und über das Netz aus Rückleitungen 18 können diese Werte von jedem Überwachungsgerät 50 oder Diagnosegerät erfaßt werden.

Je nach dem, ob das Rohrleitungssystem einheitliche oder verschiedene Fühlerarten aufweist, muß das zugehörige Überwachungsgerät 50 unterschiedlich bestückt sein, so daß beispielsweise ein Analyseschaltkreis aufgrund der im Informationsabschnitt 40 enthaltenen Informationen feststellen kann, ob diese Informationen die Anzeige einer Temperatur oder eine Feuchtigkeit oder eines Druckes oder dgl. beinhalten und welche Quantifizierung besteht. Die Ergebnisse aus einem solchen Analysekreis werden im einfachsten Fall durch eine entsprechende Ja-Nein-Quittierung optisch und/oder akustisch ermittelt oder aber über entsprechende Anzeigen sichtbar gemacht, wie schematisch in Fig. 2 das Überwachungsgerät 50 zeigt. An das Überwachungsgerät 50 wird in der Zentrale zweckmäßigerweise eine Anzeigevorrichtung 54 angeschlossen, welche ein entsprechendes Rohrleitungssystem 60 mit Rohrleitungshauptzweigen 62 und 62' und entsprechenden Rohrleitungsnebenzweigen 64 und 64' wiedergibt, so daß die gesamte Anzeige dem Verlegeplan des Rohrleitungssystems 60 einschließlich Rohrleitungsendstellen 66 entspricht. Hierzu wird jeder Schalter 10 im Rohrleitungssystem 60 durch einen zugehörigen Leuchtabschnitt signalisiert, so daß bei der Abfrage einzelner Meßwerte auf der Anzeige 54 jeweils der zugehörige Meßort optisch mit angezeigt werden kann. Bei einer automatischen Überprüfung schaltet der Analysekreis, wenn ein entsprechender Schalter 56 an dem Überwachungsgerät 50 betätigt worden ist, automatisch von einer Adresse auf die nächste um, so daß zyklisch sämtliche Schalter 10 im Rohrleitungssystem abgeprüft werden und dieser Vorgang optisch in der Anzeige 54 verfolgt werden kann. Bei einem solchen Automatikbetrieb kann beispielsweise in der Anzeige 54 jeder Abschnitt durch eine entsprechende grün aufleuchtende Lampe signalisieren, daß alle vorgegebenen Sollwerte eingehalten sind. Stellt der Analysekreis jedoch in dem Überwachungsgerät 50 eine Abweichung eines bestimmten Schalters 10 von einem vorgegebenen Sollwert fest, so daß neben der ziffernmäßigen Anzeige auch eine entsprechend optische Anzeige in der Anzeigevorrichtung 54 durch beispielsweise rot aufleuchtendes Licht im zugehörigen Abschnitt angezeigt werden.

Da jedem zu überwachenden Bauelement, wie z. B. Haubenkanalstrecke, Schacht, Rohrleitungsstrecke, Armaturen, Schieber oder Pumpen ein Schalter zugeordnet wird, kann von jeder Diagnosestelle und nicht nur von der Zentrale eine Überprüfung des gesamten Netzes vorgenommen werden. Bei einer vorteilhaften Ausgestaltung wird die Signalimpulsfolge 38 auf ein Dauersignal mit einem bestimmten Spannungspegel U1 aufgeprägt, so daß dieser Dauerspannungspegel die Stromversorgung für die Halbleiterbauelemente bilden kann. Wird eine Signalleitung 16 oder 18 unterbrochen und sind in den einzelnen Schaltern 10 keine Pufferakkus vorgesehen, so müßte von einem Diagnosegerät eine eine Spannungsgrundpegel U1 aufweisende Impulsfolge ausgesendet werden können. Sind jedoch vorteilhafterweise Energiepuffer in den einzelnen Schaltern 10 vorgesehen, so genügt für das Diagnosegerät die Möglichkeit der Einspeisung und des Empfangs von Signalimpulsfolgen mit dem Spannungshub von U1 bis U2, wie in Fig. 2 dargestellt. Dieses Rohrleitungssystem ermöglicht dem Fachmann eine Menge neuer Anwendungsmöglichkeiten, wie z. B. den Einbau einer Sender-Empfängervorrichtung in den Schalter 10, so daß beispielsweise ein Anschluß an die Signalleitung 16 und die Rückleitung 18 auch drahtlos in solchen Gegenden des Rohrleitungssystems möglich ist, wo keine Endstellen zugänglich sind.

Eine besonders einfache Ausführungsform besteht darin, daß die Signalleitung 16 und die Signalrückleitung 18 über elektrisch leitende Teile des Rohrleitungssystems geführt werden, wobei beispielsweise das Mediumrohr 1 als Rückleitung und das Mantelrohr 3 als Signalleitung 16 verwendet werden könnte. Bei besonders verzweigten Netzen wird vorteilhafterweise die Adresse der Schalter nach Haupt- und Nebenzweigen organisiert, so daß in Haupt- und Nebenzweigen jeweils gemeinsame Adreßteile vorhanden sind.

Natürlich ist es auch denkbar, daß der Schalter 10 vollständig in eine oder beide vorgefertigte Halbschalen 7 integriert wird, oder daß die beiden Halbschalen einen Freiraum bilden, in den ein Ergänzungsteil eingesetzt wird, das aus dem gleichen Material wie die Halbschalen besteht und das den Schalter 10 aufnimmt.

**Patentansprüche**

1. Anordnung zur Überwachung eines eine Wärmedämmung (2, 7, 8) aufweisenden und aus einer Vielzahl von miteinander verschweißten Rohrschüssen (1a, 1b) aufgebauten Rohrleitungssystems auf physikalische Zustandsänderungen im Bereich des Rohrleitungssystems, mit

— einer dem Verlauf des Rohrleitungssystems folgenden elektrischen Leitung, welche einen Sendeleiter (16) und einen Empfangsleiter (18) umfaßt,
— einer Anzahl von entlang dem Rohrleitungssystem verteilten Meßstationen, welche jeweils mindestens einen an einem vorgegebenen Abschnitt des Rohrleitungssystems angeordneten Meßfühler (12, 14) zur Erfassung einer physikalischen Zustandsänderung, sowie jeweils einen durch ein zugeordnetes Abfragesignal aktivierbaren Schalter (10) umfaßt, über den der mindestens eine Meßfühler mit der elektrischen Leitung verbindbar ist,
— einem an die elektrische Leitung angeschlossenen zentralen Überwachungsgerät (50) zur Aussendung der Abfragesignale über den Sendeleiter (16) und zur Analyse der über den jeweils aktivierten Schalter (10) sowie dem Empfangsleiter (18) erhaltenen Meßfühlersignale,

dadurch gekennzeichnet, daß

— jede Meßstation vorgefertigte Teile (7) aus wärmedämmendem Material aufweist, welche mit Aussparungen zur Aufnahme des mindestens einen Meßfühlers des Schalters der Meßstation sowie des Sende- und des Empfangsleiters (18) versehen sind, und
— ein Teil der Wärmedämmung im Bereich der Schweißstellen (1c) der Rohrschüsse (1a, 1b) jeweils von diesen vorgefertigten, jeweils mit dem Meßfühler, dem Schalter, dem Sende- und Empfangsleiter bestückten und nach Verschweißung der Rohrschüsse montierten Teilen (7) gebildet ist.

2. Anordnung nach Anspruch 1, gekennzeichnet durch weitere Meßstationen, die ebenfalls jeweils mindestens einen Meßfühler (14) sowie jeweils einen Schalter (10) umfassen und jeweils bei der Herstellung eines Rohrschusses (1b) jeweils in dessen Wärmedämmung integriert sind.

3. Anordnung nach Anspruch 1 oder 2, dadurch gekennzeichnet, daß das Rohrleitungssystem an vorgegebenen Stellen jeweils mit der elektrischen Leitung verbundene Diagnoseanschlüsse (22) für ein weiteres Überwachungsgerät aufweist.

4. Anordnung nach einem der vorhergehenden Ansprüche, dadurch gekennzeichnet, daß an die Schalter (10) der Meßstationen zusätzliche, außerhalb der vorgefertigten Teile (7) angeordnete Meßfühler (12', 14') angeschlossen sind.

5. Anordnung nach einem der vorhergehenden Ansprüche, dadurch gekennzeichnet, daß die Meßfühler (12, 12', 14, 14') von Feuchtigkeitsfühlern, Temperaturfühlern, Druckfühlern, Dehnungsfühlern, Gasfühlern und/oder Ölfühlern gebildet sind.

6. Anordnung nach einem der vorhergehenden Ansprüche, dadurch gekennzeichnet, daß an das Überwachungsgerät (50) eine Anzeigevorrichtung (54) angeschlossen ist, auf der die Position der Meßstationen innerhalb eines Verlegeplanes des Rohrleitungssystems sowie das Auftreten einer Zustandsänderung an den Meßstationen angezeigt wird.

**Claims**

1. Arrangement for monitoring any changes of physical state in a pipe system with heat insulation (2, 7, 8) and made up of a number of welded lengths of pipes (1a, 1b),
comprising
an electrical line following the course of the pipe system and containing a transmission line (16) and a receiving line (18),
a number of measuring stations distributed along the pipe system, each station containing at least one sensor (12, 14) arranged at a given section of the pipe system to detect any changes of physical state as well as one switch (10) which can be activated by an inquiry signal associated to said switch and with which said at least one sensor can be connected to the electric line,
a central monitor (50) connected to the electric line to send the inquiry signals via the transmission line (16) and to analyse the sensor signals received from the activated switch (10) and the receiving line (18),
characterized in that
each measuring station contains prefabricated parts (7) made out of heat insulation material which are provided with grooves to receive said at least one sensor of the switch of the measuring station as well as the transmission line (16) and the receiving line (18), and that
said prefabricated parts (7) which are respectively provided with the sensor, the switch, the transmission line and the receiving line and mounted after welding of the lengths of pipe constitute part of the heat insulation in the area of the welding points (1c) of the lengths of pipe (1a, 1b).

2. Arrangement according to claim 1, characterized by other measuring stations which also respectively contain at least one sensor (14) and one switch (10) and are integrated during the production of a length of pipe (1b) into its heat insulation.

3. Arrangement according to claim 1 or 2, characterized in that the pipe system is provided with monitoring connections (22) at given places connected to the electric line for a further monitoring.

4. Arrangement according to one of the preceding claims, characterized in that supplementary sensors (12', 14') arranged outside the prefabricated parts (7) are connected to the switches (10) of the measuring station.

5. Arrangement according to one of the preceding claims, characterized in that the sensors (12, 12', 14, 14') are humidity, temperature, extension, gas and/or oil sensors.

6. Arrangement according to one of the preceding claims, characterized in that an indicator (54) is connected to the monitor (50) and that it indicates the position of the measuring stations within an installation diagram of the pipe system as well as any changes of state appearing at said measuring stations.

**Revendications**

1. Assemblage permettant de contrôler les changements d'état physiques dans un système de tuyautage à isolation thermique (2, 7, 8) composé de plusieurs tuyaux (1a, 1b) soudés les uns aux autres
comprenant
une conduite électrique suivant le tracé du système de tuyautage et contenant un conducteur d'émission (16) et un conducteur de réception (18),
un nombre de postes de mesure répartis le long du système de tuyautage, chaque poste comportant au moins un détecteur (12, 14) situé sur une section déterminée du système de tuyautage afin d'enregistrer tout changement d'état physique ainsi qu'un interrupteur (10) pouvant être activé par un signal de demande associé, par l'intermédiaire duquel le ou les détecteur(s) peuvent être reliés à la conduite électrique,
un appareil de contrôle (50) central relié à la conduite électrique afin de diffuser les signaux de demande par l'intermédiaire du conducteur d'émission (16) et d'analyser les signaux de détecteur reçus par l'intermédiaire de l'interrupteur activé (10) et du conducteur de réception (18),
caractérisé en ce que
chaque poste de mesure contient des pièces préfabriquées (7) en matériel isolant munies d'encoches afin d'enregistrer le ou les détecteur(s) de l'interrupteur du poste de mesure ainsi que du conducteur d'émission et du conducteur de réception (18), et que
chaque partie de l'isolation thermique au niveau des endroits soudés (1c) des tronçons de tuyaux (1a, 1b) est constituée par ces pièces préfabriquées (7), dont chacune est munie du détecteur, de l'interrupteur, du guide d'émission et du guide de réception, et qui sont montées après soudure des tronçons de tuyaux.

2. Assemblage selon la revendication 1, caractérisé par d'autres postes de mesure dont chacun comporte également au moins un détecteur (14) et un interrupteur (10), ces postes étant intégrés à chaque production de tronçon de tuyau (1b) dans son isolation thermique.

3. Assemblage selon la revendication 1 ou 2, caractérisé en ce que le système de tuyautage contient à certains endroits des connexions-diagnostic (22), chacune de ces connexions étant reliée à la conduite électrique pour un autre appareil de contrôle.

4. Assemblage selon l'une des revendications précédentes, caractérisé en ce que des détecteurs supplémentaires (12', 14') situés en dehors des pièces préfabriquées (7) sont connectés aux interrupteurs (10) des postes de mesure.

5. Assemblage selon l'une des revendications précédentes, caractérise en ce que les détecteurs (12, 12', 14, 14') sont constitués par des détecteurs d'humidité, de température, de pression, d'extension, de gas et/ou d'huile.

6. Assemblage selon l'une des revendications précédentes, caractérisé en ce qu'un dispositif de signalisation (54) est connecté à l'appareil de contrôle (50) et que ce dispositif indique la position des postes de mesure à l'intérieur d'un plan de connexion du système de tuyautage ainsi que l'apparition de tout changement d'état aux postes de mesure.

**Fig. 1**

Fig. 2